# EUROPEAN PATENT SPECIFICATION

(11) **EP 3 565 956 B1**
(45) Date of publication and mention of the grant of the patent: **15.04.2020**
(21) Application number: 17725922.3
(22) Date of filing: 17.05.2017
(51) Int. Cl.: F01L 3/06, F01L 3/20

(54) **POPPET VALVE AND METHOD FOR PRODUCTION THEREOF**
HUBVENTIL UND HERSTELLUNGSVERFAHREN DESSELBEN
SOUPAPE ET SA MÉTHODE DE FABRICATION

(43) Date of publication of application: 13.11.2019
(73) Proprietor: Federal-Mogul Valvetrain GmbH, 30890 Barsinghausen (DE)
(72) Inventor: MAREAU, Andr, 67200 Strasbourg (FR); LAHLALL, Mohamed, 67600 Selestat (FR); MOMBLED, Julien, 67200 Strasbourg (FR); TISSERAND, Albin, 67190 Dinsheim-sur-Bruche (FR); HANUS, Jean-Marie, 67420 Champenay (FR)
(74) Representative: Becker & Kurig Partnerschaft Patentanwälte PartmbB
(86) International application number: PCT/EP2017/061829
(87) International publication number: WO 2018/210417

(56) References cited:
- JP-A- S5 841 212
- JP-A- H08 100 612
- JP-A- H10 339 246
- JP-U- S 564 610
- JP-U- S5 736 305

## Description

### Technical Field

The present invention relates to poppet valves - specifically poppet valves for combustion engines - which are provided with a protrusion on a fillet portion of the valve head. In particular, the present invention relates to a method for producing such poppet valves.

### Background of the Invention

Valve heads may be provided with one or more protrusions on the so-called fillet portion of the valve head, i.e. on the side of the valve head facing away from the combustion chamber. On inlet valves such protrusions are useful for orienting the fuel flow into the combustion chamber for improving combustion. On outlet valves their use lies in guiding the gas in the direction of the exhaust system to better evacuate residual combustion particles.

Currently poppet valves with protrusions on the fillet portion of the valve head are produced using a forging process, which is difficult to adjust due to the complicated shape of the forge that is required for forming the protrusions. The tools that are used in this forging process are subjected to a high level of wear. Since finer structures cannot be obtained by forging, it is usually necessary to perform a machining operation after the forging process to obtain the final form of the protrusion and to finish the valve. This means that additional material is necessary for the forging process, which is later removed. A further negative aspect of this production method by forging is that the crown/flap needs to be made from the same material as the rest of the valve. Also, this method is not suitable for ultra-light valves which are produced using a deep-drawing process.

Therefore, objectives of the present invention are to provide a production method of poppet valves with protrusions on the fillet portion of the valve head which avoids these problems, and to provide accordingly produced poppet valves.

An example of a conventional poppet valve comprising protrusions on the fillet portion is disclosed in JP S58 41212 A.

### Summary of the Invention

The objective is achieved by a poppet valve for a combustion engine comprising a valve body having a valve stem and a valve head, wherein said valve head comprises a fillet portion; and at least one protrusion of a predetermined shape located on an outer surface of said fillet portion; wherein said at least one protrusion is formed by at least one weld seam obtained by depositing material on said outer surface of the fillet portion using a welding process.

In a further aspect of the present invention the material of said at least one protrusion can be different from the material of said valve body.

In another aspect said at least one protrusion can comprise several weld seams which are superimposed.

In another aspect said at least one protrusion can comprise weld seams of different materials. In another aspect said at least one protrusion can have the shape of an annular rib.

In another aspect the height and/or width of said annular rib can vary in circumferential direction.

In another aspect said at least one protrusion can have the shape of a vane extending at least partially in an axial direction.

In another aspect the height and/or width of said vane can vary in the axial direction.

The objective is further achieved by a method for production of a poppet valve for a combustion engine, comprising: providing a valve body having a valve stem and a valve head, wherein said valve head comprises a fillet portion; and depositing material on an outer surface of said fillet portion using a welding process, such that at least one protrusion of a predetermined shape is formed by at least one weld seam.

In a further aspect the method of the present invention can comprise providing said material in the form of a powder material, wherein said welding process comprises laser welding.

In another aspect of the method the material of said at least one protrusion can be different from the material of the valve body.

In another aspect the method can further comprise superimposing several weld seams in order to form said at least one protrusion.

In another aspect the method can further comprise providing different materials and forming weld seams of different materials.

In another aspect the method can further comprise machining of said fillet portion before said step of depositing material.

In another aspect the method can further comprise machining of said at least one protrusion after said step of depositing material.

According to a further aspect of the present invention it is provided a poppet valve for a combustion engine comprising a valve body having a valve stem and a valve head, wherein said valve head comprises a fillet portion; and at least one protrusion located on an outer surface of the fillet portion; wherein said poppet valve is produced using any one of the above methods.

### Brief Description of the Drawings

The invention will now be described in further detail with reference to the drawings. In the drawings,
Fig. 1 shows a poppet valve prior to processing by the method of the present invention;
Fig. 2 shows a poppet valve produced according to the present invention;
Fig. 3 shows another poppet valve according to the present invention;
Fig. 4 illustrates the build-up process of a protrusion according to the production method of the present invention; and
Fig.5 shows a flow-chart of the method according to the present invention.

### Detailed Description of the Invention

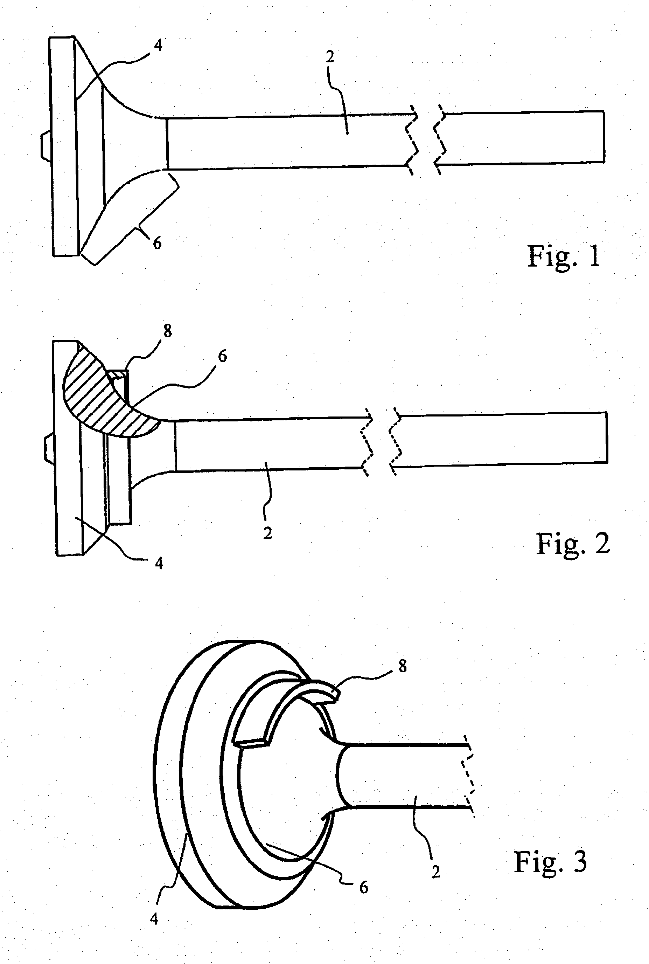

Fig. 1 shows a poppet valve (in the following also simply denoted as valve) prior to the process of a build-up of at least one protrusion described below. The poppet valve comprises a valve body that includes a valve stem 2 and a valve head 4. The valve head 4 comprises a fillet portion 6 on the side of the valve head 4 that is facing towards the valve stem 2 and facing away from the combustion chamber. The term 'fillet portion' in the context of the present invention denotes the portion on the poppet valve which extends from the stem to the outer periphery of the valve head; often, in an axial cross section of the valve, the fillet portion has a rounded contour. Wherein the axial direction is defined by the longitudinal axis of the valve stem, which is also the axis of the poppet vale; a radial direction is perpendicular to the axial direction.

Figs. 2 and 3 show poppet valves having a protrusion 8 located on an outer surface of the fillet portion 6. Generally more than one protrusion can be located on the outer surface of the fillet portion 6. The at least one protrusion is formed by at least one weld seam using a cladding method as described below. According to this method the at least one protrusion is in particular formed by superimposing several weld seams, which allows forming the at least one protrusion with a predetermined shape.

In Fig. 2 the protrusion 8 has the shape of an annular rib (i.e. a 'crown' on the valve head) extending around the axis of the poppet valve. The protrusion 8 in Fig. 3 has the shape of a part of an annular rib, but extends only within a limited angular range, i.e. a 'flap'. Similarly there could be several ribs and/or flaps located on the fillet portion. The protrusions shown extend in an axial direction. Of course, protrusions extending with a different angle with respect to the surface of the fillet portion and/or to the axial direction are possible.

The shapes of the protrusions shown in Figs. 2 and 3 are only examples for possible shapes. Another possible shape is for example an annular rib whose height (i.e. their extension from the surface of the fillet portion) and/or width vary in the circumferential direction. It is also conceivable (not shown) that the at least one protrusion has the shape of a vane (i.e. a fin) extending at least partly in the axial direction. The vane(s) (more precisely the plane defined by the vane) can be parallel to the axial direction or inclined, in particular curved, with respect to the axial direction. The height and/or width of the vane(s) can vary in the axial direction. Vanes, if non-parallel to the valve axis, can be used to generate a vortex in the air-fuel mixture or the combustions gas.

Further, the width (extension parallel to the surface of the fillet portion) of the protrusion can vary. This variation may include a variation of the width at the surface of the fillet portion along the axial/circumferential direction as well as a variation with distance from the surface of the fillet portion (i.e. a variation with height). An example for the latter variation is a tapered shape.

In order to not interfere with the correct operation of the valve the at least one protrusion is located in a section of the outer surface of the fillet portion outside of the valve face, wherein 'valve face' means the part of the surface of the valve head that comes in contact with a corresponding valve seat of a cylinder head. That is, the at least one protrusion is located in a section of the outer surface of the fillet portion between the valve face and the stem.

The valve body and the protrusion(s) are preferably made from a valve steel. More preferably the material of the valve body is selected from X50 (DIN 1.4882), X53 (DIN 1.4871), X45 (1.4718), NC20 (DIN 2.4952), X85 (DIN 1.4748), 3015 and 2512 NbN and the material of the at least one protrusion is, independently of the material of the valve body, selected from X50 (DIN 1.4882), X53 (DIN 1.4871), X45 (1.4718), NC20 (DIN 2.4952), X85 (DIN 1.4748), X60 (DIN 1.4785), INCONEL® 718 (the numbers in the brackets indicate the respective material number for each material).

The material may vary within the at least one protrusion, since the material can be different for different weld seams. This allows a section by section adjustment of the technical properties of the at least one protrusion.

The method, according to the present invention, to produce poppet valves with at least one protrusion on the fillet portion comprises providing a valve body (having a valve head and a valve stem) and building-up at least one protrusion by depositing material using a welding process - i.e. by cladding or weld cladding - on the outer surface of the fillet portion, more specific in a section of the outer surface of the fillet portion between the valve face and the stem. The valve body can be produced by a method known in the art, e.g. with a forging process. The depositing of the material is done by a welding process, using preferably a laser welding process. The material is preferably applied in a powder form and/or is preferably different from the material of the valve body.

This method allows a very efficient production process, which is fast and requires less energy and less material than currently used production methods for poppet valves with protrusions. The shape of the protrusion(s) after the cladding will be very close to the final shape, meaning that less, or even no, machining is necessary. This is particularly advantageous for high alloy materials, for which a machining operation is hard to perform. A further advantage is that the material of the at least one protrusion can be different from the material of the valve body; see above for a list of preferred materials.

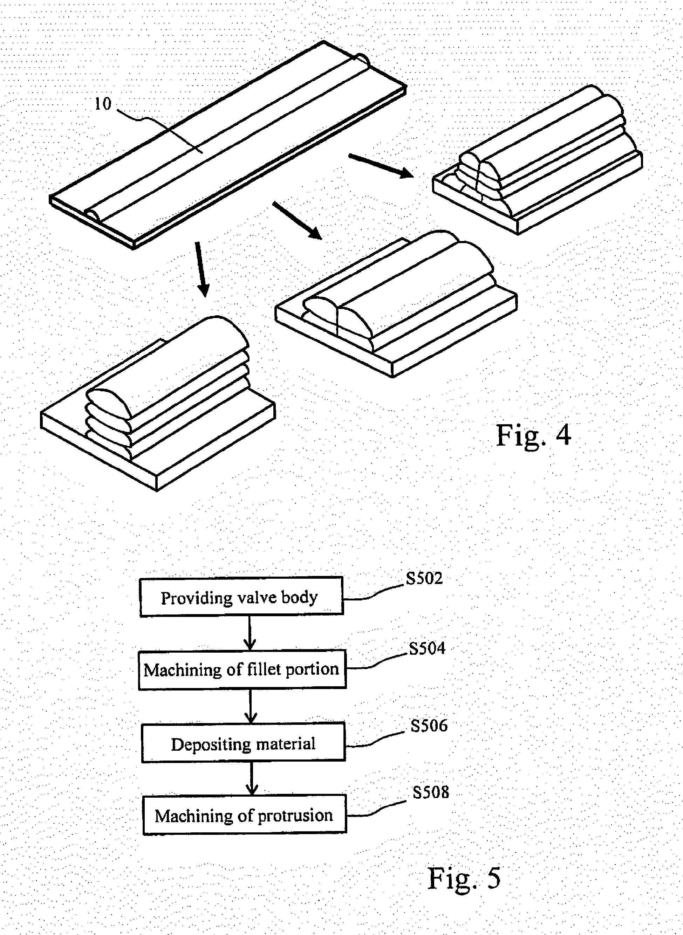

Fig. 4 illustrates the built-up process of a protrusion, which is done by depositing one or more weld seams 10 on a surface using the welding process. In a certain range the shape of the at least one protrusion can be determined by adjusting the process parameters of the welding process, e.g. by the material depositing rate, welding speed or width of the welding area. For higher and/or wider shapes several weld seams 10 are superimposed. For example several weld seams can be put on top of each other in order to increase the height of the protrusion (e.g. the 1-1-1-1 configuration in the figure). A wider protrusion can be obtained by depositing several weld seams parallel next to each other on the surface (e.g. 2 or 3 in the figure resulting in 2-2 and 3-2-2-2 configurations). The height of the wider protrusion is accordingly increased by depositing several weld seams next to each other on top of a lower layer of weld seams. The width of the protrusion can be varied by varying the number of weld seams in each layer (as an example a 3-2-2-2 configuration is shown in the figure), this can be utilized to obtain a tapered protrusion. The height of one protrusion can be varied by having sections with different numbers of superimposed weld seam layers along the protrusion.

Using this technique it is possible to build-up protrusions having a variety of shapes, in particular the shapes described above, i.e. annular ribs and vanes. Annular ribs are particularly easy to form, since the valve body can be rotated while the welding device is stationary in order to obtain one weld seam 10; a small repositioning of the welding device allows forming another weld seam thereby superimposing the weld seams. The versatility of the method allows forming of protrusions different from annular ribs and vanes, e.g. corrugated shapes or raised portions having, when viewed in radial direction, not an elongated shape but a rounded, circular or rectangular shape covering a part of the fillet portion.

It is further possible to vary the material of the at least one protrusion within the protrusion by providing and using different materials having different physical/technical properties for different weld seams; see above for a list of preferred materials. As an example a material of high heat resistance can be used on a side of the protrusion facing the combustion chamber and a material of high heat conductivity on the opposite side facing away from the combustion chamber. In the same way materials of different hardness, corrosion resistance, ductility, ... can be used for different weld seams. Since the material can be varied with each weld seam, a variation of the material within the at least one protrusion is possible with the height as well as with the width.

The outer surface of the valve body, in particular of the fillet portion, can be machined before the process of forming at least one protrusion in order to prepare it for the welding. Preferably the step of depositing material is followed by machining the surface of the poppet valve, in particular the surface of the at least one protrusion. The final shape of the at least one protrusion and the desired surface finish of the valve can be obtained in this way. In both cases (before/after the depositing step) machining may include grinding, turning, milling, shot blasting and tribo-finishing.

Fig. 5 shows a flow-chart of the method according to the present invention. The two main steps are providing a valve body S502 (having a valve stem and a valve head with a fillet portion) and depositing material S506 on an outer surface of the fillet portion. Wherein providing the valve body may include producing the valve body using a method known in the art and wherein the deposition of material is done using the cladding method as described above. The figure shows two possible additional steps, namely, a machining of the fillet portion S504 before the step of depositing material, and a machining of the protrusion S508 after the step of depositing material.

It should be clear to the skilled person that different aspects of the method can be combined in order to obtain a poppet valve having one or more protrusions on the fillet portion, wherein the protrusion(s) can be formed to obtain a poppet valve having desired technical properties, i.e. shape, material, surface finish, ... of the at least one protrusion.

### List of Reference Signs:

- 2: valve stem
- 4: valve head
- 6: fillet portion
- 8: protrusion
- 10: weld seam

## Claims

1. A poppet valve for a combustion engine comprising
a valve body having a valve stem (2) and a valve head (4), wherein said valve head (4) comprises a fillet portion (6); and
at least one protrusion (8) of a predetermined shape located on an outer surface of said fillet portion (6);
wherein said at least one protrusion (8) is formed by at least one weld seam (10) obtained by depositing material on said outer surface of the fillet portion (6) using a welding process;
**characterized in that**
said at least one protrusion (8) comprises several weld seams (10) which are superimposed.

2. The poppet valve according to claim 1, wherein the material of said at least one protrusion (8) is different from the material of said valve body.

3. The poppet valve according to any one of the claims 1-2, wherein said at least one protrusion (8) comprises weld seams (10) of different materials.

4. The poppet valve according to any one of the preceding claims, wherein said at least one protrusion (8) has the shape of an annular rib.

5. The poppet valve according to claim 4, wherein the height and/or width of said annular rib varies in circumferential direction.

6. The poppet valve according to any one of the claims 1 - 3, wherein said at least one protrusion has the shape of a vane extending at least partially in an axial direction.

7. The poppet valve according to claim 6, wherein the height and/or width of said vane varies in the axial direction.

8. A method for production of a poppet valve for a combustion engine, comprising:
providing a valve body (S502) having a valve stem (2) and a valve head (4), wherein said valve head (4) comprises a fillet portion (6);
depositing material (S506) on an outer surface of said fillet portion (6) using a welding process, such that at least one protrusion (8) of a predetermined shape is formed by at least one weld seam (10); and
superimposing several weld seams in order to form said at least one protrusion (8).

9. The method according to claim 8, wherein the material is provided in the form of a powder material and said welding process comprises laser welding.

10. The method according to any one of the claims 8 - 9, wherein the material of said at least one protrusion (8) is different from the material of said valve body.

11. The method according to any one of the claims 8 - 10, further comprising providing different materials and forming weld seams (10) of different materials.

12. The method according to any one of the claims 8 - 11, further comprising machining (S504) of said fillet portion (6) before said step of depositing material.

13. The method according to any one of the claims 8 - 12, further comprising machining (S508) of said at least one protrusion (8) after said step of depositing material.

14. A poppet valve for a combustion engine comprising
a valve body having a valve stem (2) and a valve head (4), wherein said valve head comprises a fillet portion (6); and
at least one protrusion (8) located on an outer surface of the fillet portion (6);
wherein said poppet valve is produced by a method according to any one of the claims 8 - 13.

## Patentansprüche

1. Tellerventil für einen Verbrennungsmotor, umfassend
einen Ventilkörper, der einen Ventilschaft (2) und einen Ventilkopf (4) aufweist, wobei der Ventilkopf (4) einen Übergangsabschnitt (6) umfasst; und
wenigstens einen Vorsprung (8) einer vorbestimmten Form, der sich auf einer äußeren Fläche des Übergangsabschnitts (6) befindet;
wobei der wenigstens eine Vorsprung (8) durch wenigstens eine Schweißnaht (10) gebildet ist, die durch Abscheiden von Material auf der äußeren Fläche des Übergangsabschnitts (6), unter Verwendung eines Schweißverfahrens, erhalten wird;
**gekennzeichnet dadurch, dass** der wenigstens eine Vorsprung (8) mehrere Schweißnähte (10) umfasst, die überlagert sind.

2. Tellerventil nach Anspruch 1, wobei sich das Material des wenigstens einen Vorsprungs (8) von dem Material des Ventilkörpers unterscheidet.

3. Tellerventil nach einem der Ansprüche 1-2, wobei der wenigstens eine Vorsprung (8) Schweißnähte (10) aus verschiedenen Materialien umfasst.

4. Tellerventil nach einem der vorhergehenden Ansprüche, wobei der wenigstens eine Vorsprung (8) die Form einer ringförmigen Rippe aufweist.

5. Tellerventil nach Anspruch 4, wobei die Höhe und/oder Breite der ringförmigen Rippe in Umfangsrichtung variiert.

6. Tellerventil nach einem der Ansprüche 1-3, wobei der wenigstens eine Vorsprung die Form einer Schaufel aufweist, die sich wenigstens teilweise in einer axialen Richtung erstreckt.

7. Tellerventil nach Anspruch 6, wobei die Höhe und/oder Breite der Schaufel in der axialen Richtung variiert.

8. Verfahren zur Herstellung eines Tellerventils für einen Verbrennungsmotor, umfassend:
Bereitstellen eines Ventilkörpers (S502), der einen Ventilschaft (2) und einen Ventilkopf (4) aufweist, wobei der Ventilkopf (4) einen Übergangsabschnitt (6) umfasst;
Abscheiden von Material (S506) auf einer äußeren Fläche des Übergangsabschnitts (6) unter Verwendung eines Schweißverfahrens, so dass wenigstens ein Vorsprung (8) einer vorbestimmten Form durch wenigstens eine Schweißnaht (10) gebildet wird; und
Überlagern mehrerer Schweißnähte, um den wenigstens einen Vorsprung (8) zu bilden.

9. Verfahren nach Anspruch 8, wobei das Material in der Form eines Pulvermaterials bereitgestellt wird und das Schweißverfahren Laserschweißen umfasst.

10. Verfahren nach einem der Ansprüche 8-9, wobei sich das Material des wenigstens einen Vorsprungs (8) von dem Material des Ventilkörpers unterscheidet.

11. Verfahren nach einem der Ansprüche 8-10, ferner umfassend Bereitstellen sich unterscheidender Materialien und Bilden von Schweißnähten (10) aus sich unterscheidenden Materialien.

12. Verfahren nach einem der Ansprüche 8-11, ferner umfassend Bearbeiten (S504) des Übergangsabschnitts (6) vor dem Schritt des Abscheidens von Material.

13. Verfahren nach einem der Ansprüche 8-12, ferner umfassend Bearbeiten (S508) des wenigstens einen Vorsprungs (8) nach dem Schritt des Abscheidens von Material.

14. Tellerventil für einen Verbrennungsmotor, umfassend
einen Ventilkörper, der einen Ventilschaft (2) und einen Ventilkopf (4) aufweist, wobei der Ventilkopf einen Übergangsabschnitt (6) umfasst; und
wenigstens einen Vorsprung (8), der sich auf einer äußeren Fläche des Übergangsabschnitts (6) befindet;
wobei das Tellerventil durch ein Verfahren nach einem der Ansprüche 8-13 hergestellt wird.

## Revendications

1. Soupape champignon pour un moteur à combustion comprenant
un corps de soupape ayant une tige de soupape (2) et une tête de soupape (4), dans laquelle ladite tête de soupape (4) comprend une partie de filet (6) ; et
au moins une saillie (8) d'une forme prédéterminée située sur une surface externe de ladite partie de filet (6) ;
dans laquelle ladite au moins une saillie (8) est formée par au moins un cordon de soudure (10) obtenu en déposant un matériau sur ladite surface externe de la partie de filet (6) à l'aide d'un processus de soudage ;
**caractérisée en ce que**
ladite au moins une saillie (8) comprend plusieurs cordons de soudure (10) qui sont superposés.

2. Soupape champignon selon la revendication 1, dans laquelle le matériau de ladite au moins une saillie (8) est différent du matériau dudit corps de soupape.

3. Soupape champignon selon l'une quelconque des revendications 1 et 2, dans laquelle ladite au moins une saillie (8) comprend des cordons de soudure (10) de matériaux différents.

4. Soupape champignon selon l'une quelconque des revendications précédentes, dans laquelle ladite au moins une saillie (8) a la forme d'une nervure annulaire.

5. Soupape champignon selon la revendication 4, dans laquelle la hauteur et/ou la largeur de ladite nervure annulaire varie dans la direction circonférentielle.

6. Soupape champignon selon l'une quelconque des revendications 1 à 3, dans laquelle ladite au moins une saillie a la forme d'une aube s'étendant au moins partiellement dans une direction axiale.

7. Soupape champignon selon la revendication 6, dans laquelle la hauteur et/ou la largeur de ladite aube varie dans la direction axiale.

8. Procédé de production d'une soupape champignon pour un moteur à combustion, comprenant :
la fourniture d'un corps de soupape (S502) ayant une tige de soupape (2) et une tête de soupape (4), dans laquelle ladite tête de soupape (4) comprend une partie de filet (6) ;
le dépôt de matériau (S506) sur une surface externe de ladite partie de filet (6) à l'aide d'un procédé de soudage, de sorte qu'au moins une saillie (8) d'une forme prédéterminée est formée par au moins un cordon de soudure (10) ; et
la superposition de plusieurs cordons de soudure pour former ladite au moins une saillie (8).

9. Procédé selon la revendication 8, dans lequel le matériau est fourni sous la forme d'un matériau en poudre et ledit processus de soudage comprend un soudage au laser.

10. Procédé selon l'une quelconque des revendications 8 et 9, dans lequel le matériau de ladite au moins une saillie (8) est différent du matériau dudit corps de soupape.

11. Procédé selon l'une quelconque des revendications 8 à 10, comprenant en outre la fourniture de matériaux différents et la formation de cordons de soudure (10) de matériaux différents.

12. Procédé selon l'une quelconque des revendications 8 à 11, comprenant en outre l'usinage (S504) de ladite partie de filet (6) avant ladite étape de dépôt de matériau.

13. Procédé selon l'une quelconque des revendications 8 à 12, comprenant en outre l'usinage (S508) de ladite au moins une saillie (8) après ladite étape de dépôt de matériau.

14. Soupape champignon pour un moteur à combustion comprenant
un corps de soupape ayant une tige de soupape (2) et une tête de soupape (4), dans laquelle ladite tête de soupape comprend une partie de filet (6) ; et
au moins une saillie (8) située sur une surface externe de la partie de filet (6) ;
dans laquelle ladite soupape champignon est produite par un procédé selon l'une quelconque des revendications 8 à 13.
